# EUROPEAN PATENT SPECIFICATION

(11) **EP 4 588 708 B1**
(45) Date of publication and mention of the grant of the patent: **28.10.2026**
(21) Application number: 23954956.1
(22) Date of filing: 13.11.2023
(51) Int. Cl.: B60K 35/22, B60K 35/53, B60K 35/55, B60K 35/60, B60R 11/00, B60R 11/02, G06F 1/16

(54) **DISPLAY DEVICE FOR VEHICLE**
ANZEIGEVORRICHTUNG FÜR EIN FAHRZEUG
DISPOSITIF D'AFFICHAGE POUR VÉHICULE

(43) Date of publication of application: 23.07.2025
(73) Proprietor: LG Electronics Inc., Seoul 07336 (KR)
(72) Inventor: KANG, Seongbin, Seoul 06772 (KR)
(74) Representative: Vossius & Partner Patentanwälte Rechtsanwälte mbB
(86) International application number: PCT/KR2023/018127
(87) International publication number: WO 2025/105509

(56) References cited:
- WO-A1-2008/072397
- CN-A- 108 773 329
- JP-A- 2007 099 275
- JP-A- 2013 045 042
- KR-A- 20230 146 165
- US-A1- 2001 022 553
- US-A1- 2006 244 700
- US-A1- 2023 072 435

## Description

### [Technical Field]

The present invention relates to an automotive display device installed in a vehicle.

### [Background Art]

A display device can be mounted on the roof of a vehicle, and a vehicle roof-type AV display device is disclosed in Korean Patent Publication No. 10-0783965 B1 (on December 10, 2007, published), and the vehicle roof-type AV display device comprises a main body, an AV monitor hingedly connected to the main body and rotating up and down, a drive motor provided inside the main body and driving the AV monitor to rotate up and down, a gearbox connected to the main body and fixed to the roof of the vehicle and having a plurality of gears inside that are driven by the drive motor to apply left and right rotational force to the main body; a control unit that transmits a direction control signal; and a direction change means that receives a direction control signal from the control unit and changes the direction of rotational force of the gearbox to the main body to the left and right, and the up and down rotation of the AV monitor and the left and right rotation of the main body occur simultaneously by the operation of the drive motor. A display system having a fixed structure and a moving structure having a rotatable support that can rotate a display panel upward to a raised posture with a relatively small force is disclosed in the US 2006 244 700 A1. Other examples are disclosed in JP 2013 045 042 A or in WO 2008 072 397 A1.

### [Disclosure]

### [Technical Problem]

The present invention is provided to an automotive display device capable of minimizing the size and increasing the space utilization of a vehicle interior.

### [Technical Solution]

An automotive display device according to the present invention comprises a fixed module provided with a guide rail, a driving source disposed in the fixed module and a moving module connected to the driving source and disposed to move in the fixed module. The moving module comprises: a moving body connected to the driving source and moved by the driving source and a display module (50) rotatably connected to the moving body and guided by the guide rail. A pair of pins are formed on the display module. The guide rail comprises: an upper guide rail in which an upper pin of the pair of pins is guided and a lower guide rail in which a lower pin of the pair of pins is guided. Each of the upper guide rail and the lower guide rail has a rotational region guiding a rotating body of the display module to rotate, and a linear movement region guiding the rotating body of the display module to move linearly. The moving body is formed with an upper guide hole through which the upper pin passes and guides the upper pin and a lower guide hole through which the lower pin passes and guides the lower pin. A length of the lower guide hole is shorter than a length of the upper guide hole.

### [Advantageous Effect]

According to the present invention, when the display panel is not in use, the display panel can be disposed horizontally, so that when the display panel is not in use, the vertical height of the automotive display device can be minimized, the space utilization of the vehicle interior can be increased, and safety is high.

In addition, when the display panel is in use, the display panel can be disposed at an angle, and the user can conveniently input the user's request through the display interface.

In addition, the display panel can be further away from the user than when the user's request is input through the display interface, so that the user can comfortably watch video information such as a movie or a game.

### [Description of Drawings]

Fig. 1 is a perspective view illustrating an automotive display device according to the present embodiment,
Fig. 2 is an exploded perspective view illustrating the automotive display device according to the present embodiment,
Fig. 3 is a view illustrating the interior of the automotive display device according to the present embodiment,
Fig. 4 is a view illustrating a process of deploying a display module according to the present embodiment and a process of moving a display module,
Fig. 5 is a control block diagram of the automotive display device according to the present embodiment,
Fig. 6 is a side view of the automotive display device according to the present embodiment,
Fig. 7 is a cross-sectional view illustrating the interior of the automotive display device according to the present embodiment.

### [Best Mode]

Hereinafter, specific embodiments of the present invention will be described in detail with reference to the drawings.

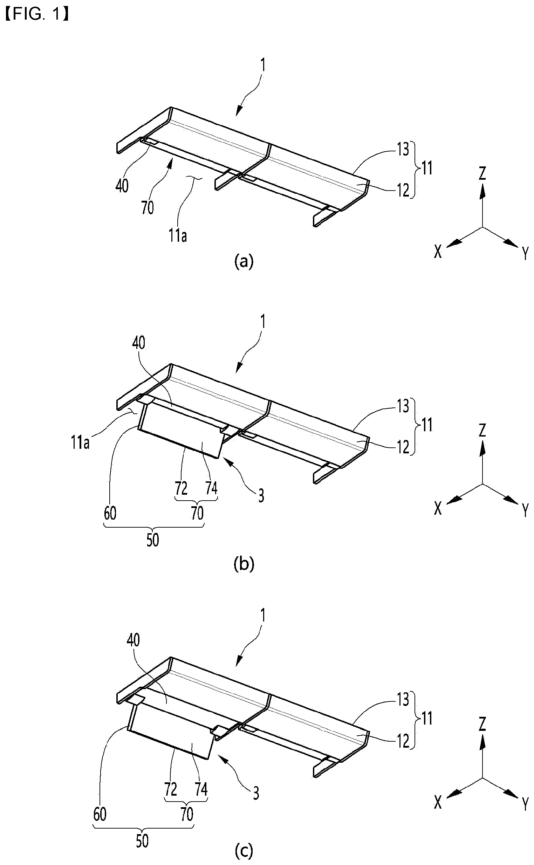

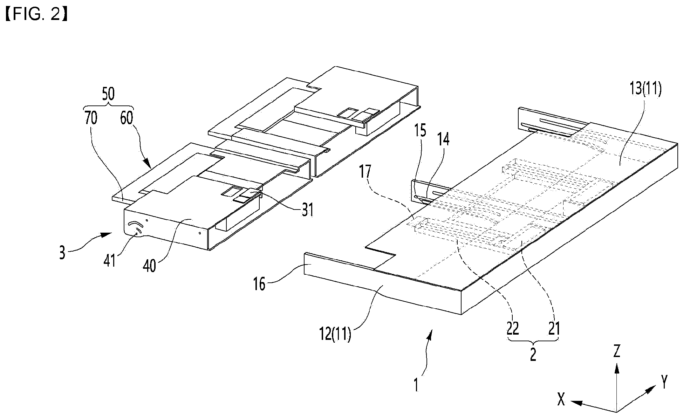

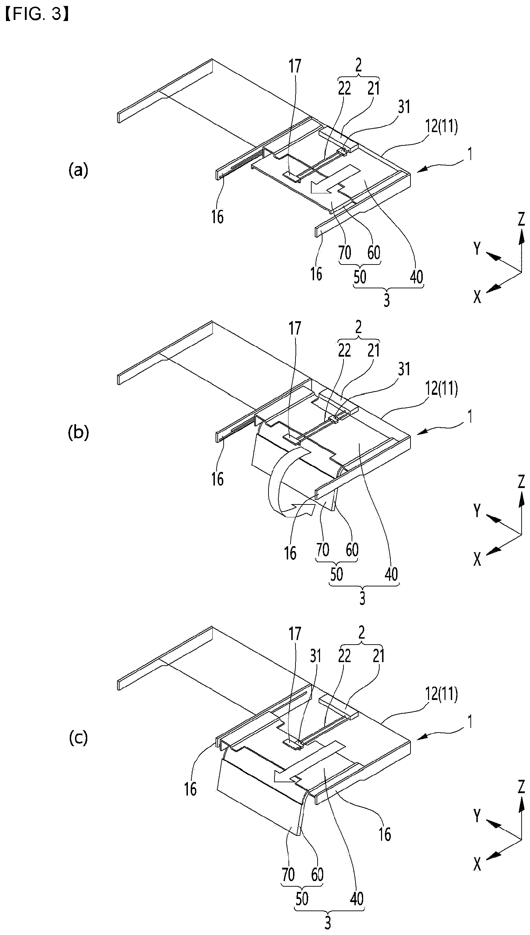

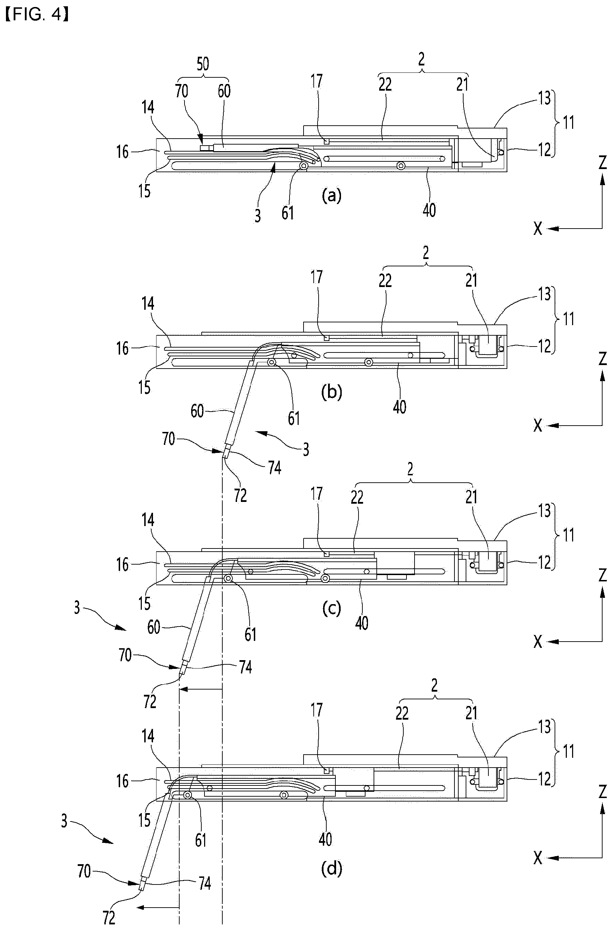

Fig. 1 is a perspective view illustrating the automotive display device according to the present embodiment, Fig. 2 is an exploded perspective view illustrating the automotive display device according to the present embodiment, Fig. 3 is a view illustrating the interior of the automotive display device according to the present embodiment, Fig. 4 is a view illustrating a process of deploying a display module according to the present embodiment and a process of moving a display module.

Fig. 1 (a) is a perspective view when the display module is off, Fig. 1 (b) is a perspective view when the display module illustrated in Fig. 1 (a) is rotated, and Fig. 1 (c) is a perspective view when the display module illustrated in Fig. 1 (b) is moved forward.

An automotive display device may comprise a fixed module 1, a driving source 2, and a moving module 3.

The fixed module 1 may comprise a housing 11.

The housing 11 may be installed on the roof of the vehicle. When a sunroof is installed on the vehicle, the housing 11 may be installed on a cross member located in front of the sunroof or on a cross member located in the rear of the sunroof. When a front sunroof and a rear sunroof are installed together in a vehicle, the housing 11 may be installed on a cross member located between the front sunroof and the rear sunroof.

The housing 11 may be mounted on the roof by a fastening member such as a screw member or a hanging member such as a hook.

The housing 11 may be formed in an overall flat shape. The height of the housing 11 in the vertical direction Z may be shorter than the length of the housing 1 in the front and rear direction X and the width of the housing 1 in the left and right direction Y.

A space may be formed inside the housing 11.

An opening 11a may be formed on the housing 11 through which the moving module 3 may be pulled out of the housing 11.

The opening 11a may be opened in the front and rear direction X on the front surface of the housing 11, and may be opened in the vertical direction Z on the front portion of the bottom surface of the housing 11.

The housing 11 may comprise a bottom housing 12; and a top cover 13 covering the bottom housing 12, and a space may be formed in at least one of the bottom housing 12 and the top cover 13. A driving source 2 may be accommodated in the space, and all or portion of a moving module 3 may be accommodated in the space.

The bottom housing 12 may comprise a left body, a right body, a lower body, an upper body, a front body, and a rear body, and the opening 11a may be formed to be opened in the front and rear direction X on the front body.

The top cover 13 may cover the space at the upper side of the bottom housing 12.

The moving module 3 may pass through the opening 11a of the housing 11.

The moving module 3 may move forward direction X through the opening 11a of the housing 11.

The moving module 3 may move from the inside of the housing 1 to the outside of the housing 1.

The fixed module 1 may be formed with a plurality of guide rails 14 and 15. The plurality of guide rails 14 and 15 may comprise an upper guide rail 14 and a lower guide rail 15.

The upper guide rail 14 and the lower guide rail 15 may be spaced apart in the vertical direction Z.

The fixed module 1 may comprise a protruding body 16.

The protruding body 16 may protrude forward from the housing 11. The protruding body 16 may protrude forward from the front end of the housing 11. At least a portion of the upper guide rail 14 and the lower guide rail 15 may be formed in the protruding body 16.

A plurality of protruding bodies 16 may be provided on the housing 11.

The fixed module 1 may further comprise a lead screw supporter 17 supporting a lead screw 22 described below, as illustrated in FIG. 3. The lead screw supporter 17 may be disposed on one of the bottom housing 12 and the top cover 13. The lead screw supporter 17 may be disposed on the lower surface of the top cover 13.

The driving source 2 may be placed in the fixed module 1.

The driving source 2 may comprise a motor 21 and a lead screw 22, as shown in FIG. 2.

The motor 21 may be placed in the housing 11. The motor 21 may be located at the rear of the space of the housing 11.

The lead screw 22 may be placed long in the front and rear direction X. The lead screw 22 may move the moving module 3 in the front and rear direction X from the upper side of the moving module 3.

The lead screw 22 may be rotated by the motor 21.

An example of the driving source 2 is that the lead screw 22 is connected to the rotational shaft of the motor 21 and may be rotated by the motor 21.

The other example of the driving source 2 may comprise a motor 21, a lead screw 22, and a gear box that transmits the driving force of the motor 21 to the lead screw 22. The gear box may comprise at least one power transmission member that transmits the driving force of the motor 21 to the lead screw 22.

The moving module 3 may be disposed to be moved in the fixed module 1. The moving module 3 may be accommodated in the space of the housing 1 and may be moved in the space. A portion of the moving module 3 may be pulled out of the housing 1.

The moving module 3 may be connected to the driving source 2 and may be moved in the front and rear direction by the driving source 2.

The moving module 3 may comprise a block 31, as shown in FIGS. 2 and 3.

The block 31 may be connected to the lead screw 22 of the driving source 2, and may move linearly along the outer surface of the lead screw 22 when the lead screw 22 rotates.

The block 31 may comprise a nut engaged with the lead screw 22. The block 31 may comprise a fastening body fastened to the moving body 40 described later of the moving module 3.

The nut may be fixed to the fastening body.

The block 31 may be disposed on the upper surface of the moving body 40. The block 31 may be disposed on the rear portion of the upper surface of the moving body 40.

The block 31 may be a carrier that transports the moving body 40 in the front and rear direction X when the motor 21 is driven.

The moving module 3 may comprise a moving body 40 and a display module 50.

The moving body 40 may be connected to a driving source 2. The moving body 40 may be moved linearly in the front and rear direction X by the driving source 2.

The moving body 40 may have a three-dimensional shape. An inner space in which a display module 50 may be accommodated may be formed inside the moving body 40.

The display module 50 may be composed of a combination of a plurality members.

The display module 50 may comprise a rotating body 60 and a display panel 70.

The display panel 70 may comprise a display element 72; and a display interface 74 disposed on the display element 72.

The display element 72 may be, for example, a flat panel display element such as an LCE or an OLED.

The display interface 74 may be, for example, a touch screen or a button.

The display interface 74 may be disposed on the lower side of the display element 72 when the display panel 70 is disposed horizontally. The display interface 74 may be disposed on the rear side of the display element 72 when the display panel 70 is disposed inclined.

A support portion 41, shown in FIG. 2 may be formed on the moving body 40.

The support portion 41 may rotatably support a rotation shaft 61, shown in FIG. 4 formed on the rotating body 60.

The support portion 41 may be a support hole that rotatably receives the rotation shaft 61. The support portion 41 may be opened in the left and right direction Y in the moving body 40.

A plurality of support portions 41 may be formed in the moving body 40.

The height of the support portion 41 may be lower than the height of the lower guide rail 15.

The support portion 41 may be closer to the front end of the moving body 40 than the rear end of the moving body 40.

A rotation shaft 61 may be formed on the rotating body 60.

The rotation shaft 61 may be the center of rotation of the rotating body 60. The rotation shaft 61 may be closer to the rear end of the rotating body 60 than the front end of the rotating body 60.

The first distance between the rotation shaft 61 and the front end of the moving body 40 may be shorter than the second distance between the rotation shaft 61 and the rear end of the moving body 40.

The display module 50 may be operated in a plurality of modes.

The plurality of modes may comprise a first mode; a second mode; and a third mode.

FIG. 3 (a) is a view when the display module is off, FIG. 3 (b) is a view when the display module illustrated in FIG. 3 (a) is rotated, and FIG. 3 (c) is a view when the display module illustrated in FIG. 3 (b) is moved in the forward direction.

FIG. 4 (a) is a view when the display module is off, FIG. 4 (b) is a view when the display module illustrated in FIG. 4 (a) is rotated, FIG. 4 (c) is a view when the display module illustrated in FIG. 4 (b) is moved forward, and FIG. 4 (d) is a view when the display module illustrated in FIG. 4 (c) is additionally moved forward.

The first mode may be a mode in which the screen of the display module 50 faces downward, as illustrated in FIG. 4 (a).

In the first mode, the display element 72 and the display interface 74 of the display module 50 may be in a horizontal state, and the screen of the display element 72 may face downward.

In the first mode, the display element 72 may be in an off state.

The second mode may be a mode in which the display module 50 is tilted in an inclined manner, as shown in FIG. 4 (b).

In the second mode, the display element 72 and the display interface 74 of the display module 50 may be inclined with respect to the vertical axis, and the screen of the display element 72 may face the inclined direction toward the rear lower side.

The user may input various commands through the display interface 74.

In the second mode, the display panel 70 may be activated.

In the second mode, the display element 72 may display image information, and the user may input a user request through the display interface 74.

The third mode may be a mode in which the display module 50 is moved forward more than in the second mode, as shown in FIG. 4 (c).

The third mode may be a state in which the display module 50 is tilted in an inclined manner, and may be a mode in which the display module 50 is moved forward more than in the second mode.

In the third mode, the display element 72 may provide entertainment such as a movie or a game through the entire screen.

The in plurality of modes may further comprise a fourth mode.

The fourth mode may be a mode in which the display module 50 is moved further forward than in the third mode, as shown in FIG. 4 (d).

The fourth mode may be a state in which the display module 50 is tilted in an inclined manner, and may be a mode in which the display module 50 is moved forward more than in the third mode.

In the fourth mode, the display element 72 may provide entertainment such as a movie or a game through the entire screen.

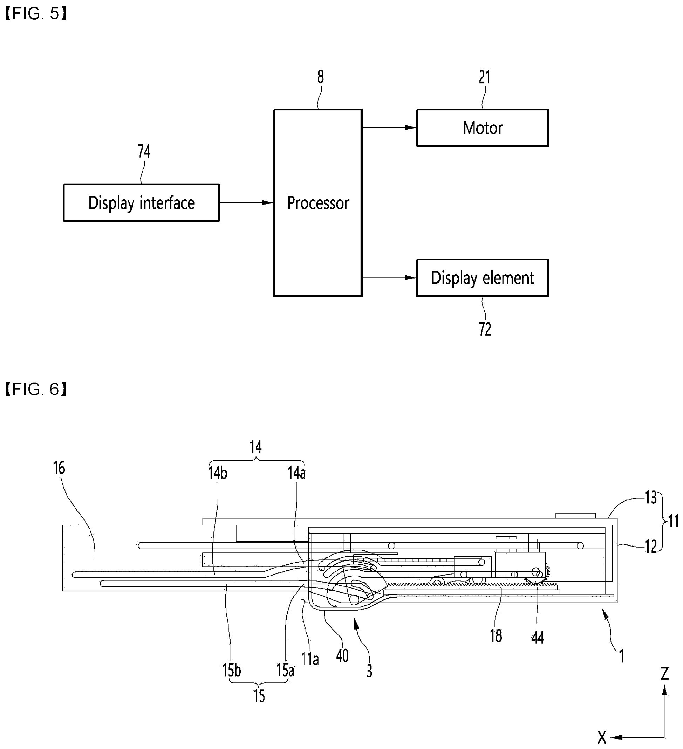

Fig. 5 is a control block diagram of the automotive display device according to the present embodiment.

The automotive display may further comprise a processor 8 that controls the driving source 2.

A user may input a mode through a button, a touch screen, a voice recognition module, a display interface 74, etc. installed in the vehicle, and the processor 8 may control the driving source 2 according to the input mode.

The processor 8 may output a control signal to the motor 21 according to the input mode, and the display module 50 may move when the motor 21 is driven.

The processor 8 may control the display element 72 according to the input of the display interface 74.

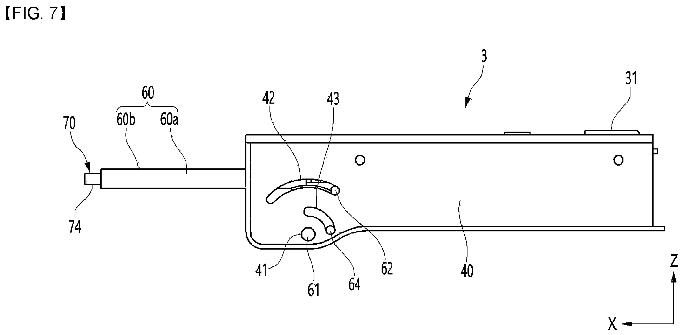

Fig. 6 is a side view of the automotive display device according to the present embodiment, and Fig. 7 is a cross-sectional view illustrating the interior of the automotive display device according to the present embodiment.

The rotating body 60 may comprise a body 60c comprising a pair of side bodies 60a and an upper body 60b connecting the upper ends of the pair of side bodies 60b.

The pair of side bodies 60b may comprise a left body and a right body, and the left body and the right body may be spaced apart in the left and right direction Y.

The upper body 60b may be disposed on the upper side of the display panel 70 based on the horizontal position of the rotating body 60.

The rotating body 60 may be formed with a pair of pins 62 and 64 as shown in FIG. 7.

One of the pair of pins 62 and 64 may be a pin located on the upper side of the pair of pins 62 and 64, and may be an upper pin 62.

The other of the pair of pins 62 and 64 may be a pin located at the lower side of the pair of pins 62 and 64 and may be a lower pin 64.

The height of the upper pin 62 may be higher than the height of the lower pin 64.

The upper pin 62 and the lower pin 64 may be spaced apart in the vertical direction Z.

The upper pin 62 and the lower pin 64 may protrude sideways from the body 60c.

Each of the upper pin 62 and the lower pin 64 may be formed to protrude sideways on the outer surface of the side body 60a of the rotating body 60. The upper pin 62 and the lower pin 64 Each may be formed to protrude from the left body and the right body, respectively.

Each of the upper fin 62 and the lower fin 64 may comprise a left fin protruding to the left from the left body of the pair of side bodies 60a, and a right fin protruding to the right from the right body of the pair of side bodies 60a.

The left-right width of the body 60c, the left-right width of the left fin, and the left-right width of the right fin may be larger than the left-right width of the moving body 40.

The rotating body 60 may comprise a body 60c, a left upper fin, a left lower fin, a right upper fin, and a right lower fin.

The left upper fin may be formed on the left body of the body 60c.

The left lower fin may be formed on the left body of the body 60c, and may have a lower height than the left upper fin.

The right upper fin may be formed on the right body of the body 60c.

The right lower fin may be formed on the right body of the body 60c, and may have a lower height than the right upper fin.

As shown in FIG. 7, a pair of guide holes 42 and 43 may be formed in the moving body 40. The pair of guide holes 42 and 43 may comprise an upper guide hole 42 and a lower guide hole 43.

One of the pair of fins 62, i.e., the upper fin 62, may penetrate the upper guide hole 42. The upper pin 62 may penetrate the upper guide hole 42 and protrude to the side of the moving body 40. The upper pin 62 may be guided to the upper guide hole 42.

The upper guide hole 42 may be an arc-shaped long hole. The upper guide hole 42 may be an arc-shaped convex shape in the forward upward direction.

The other of the pair of pins 64, i.e., the lower pin 64, may penetrate the lower guide hole 43. The lower pin 64 may penetrate the lower guide hole 43 and protrude to the side of the moving body 40.

The lower pin 64 may be guided to the lower guide hole 43.

The lower guide hole 43 may be an arc-shaped long hole. The lower guide hole 43 may have a convex arc shape toward the rearward upper direction. The length of the lower guide hole 43 is shorter than the length of the upper guide hole 42. The lower guide hole 43 may have a shape that surrounds a portion of the support portion 41.

Referring to FIG. 6, one 62 of a pair of pins 62 and 64 may be guided on the upper guide rail 14. The upper guide rail 14 may guide the upper pin 62.

Referring to FIG. 6, the other 64 of a pair of pins 62 and 64 may be guided on the lower guide rail 15. The lower guide rail 15 may guide the lower pin 64.

Each of the upper guide rail 14 and the lower guide rail 15 may have a rotation region that guides the rotating body 60 to rotate and a linear movement region that guides the rotating body 60 to move linearly.

The rotation region may comprise an upper rotation region 14a; and a lower rotation region 15a.

An upper pin 62 may be guided in the upper rotation region 14a.

The upper rotation region 14a may have an arc shape. The upper rotation region 14a may be convex toward the upward.

The length of the upper rotation region 14a may be longer than the length of the lower rotation region 14a or may be equal to the length of the lower rotation region 14a.

The curvature of the upper rotation region 14a may be greater than the curvature of the lower rotation region 14a.

The radius of curvature of the upper rotation region 14a may be smaller than the radius of curvature of the lower rotation region 14a.

A lower pin 64 may be guided in the lower rotation region 15a.

The lower rotation region 15a may be arc-shaped. The lower rotation region 15a may be convex upward.

The linear movement region may comprise an upper linear movement region 14b; and a lower linear movement region 15b.

The upper linear movement region 14b may extend forward from the front end of the upper rotation region 14a. An upper pin 62 may be guided in the upper linear movement region 14b.

The lower linear movement region 15b may extend forward from the front end of the lower rotation region 15a. A lower pin 64 may be guided in the lower linear movement region 15b.

The upper guide rail 14 may comprise an upper rotation region 12a and an upper linear movement region 12b, and the upper pin 62 may be guided along the upper rotation region 12a and the upper linear movement region 12b.

The lower guide rail 15 may comprise a lower rotation region 15a and a lower linear movement region 15b, and the lower pin 64 may be guided along the lower rotation region 15a and the lower linear movement region 15b.

The fixed module 1 may comprise a guide rack 18, as shown in FIG. 6. The guide rack 18 may be formed to be long in the front and rear direction X. The guide rack 18 may be disposed in the bottom housing 12 among the housings 11.

The guide rack 18 may guide the moving module 3 in the front and rear direction X.

The moving module 3 may slide along the guide rack 18 in the front and rear direction X.

The moving module 3 may further comprise a pinion 44.

The pinion 44 may be disposed to rotate on the moving body 40. The pinion 44 may be engaged with the guide rack 18, and may rotate while moving along the guide rack 18 when the moving body 40 moves.

When the moving body 40 moves forward from the reference position, the upper pin 62 may be guided to the upper rotation region 14a, the lower pin 64 may be guided to the lower rotation region 15a, and the rotating body 60 may be rotated around the rotation shaft 61. When the rotating body 60 rotates, the rotating body 60 may be disposed to be inclined with respect to the vertical plane and the horizontal plane. The rotating body 60 may be inclined at an angle closer to the vertical plane than the horizontal plane.

The upper pin 62 may enter the upper straight region 14b after reaching the front end of the upper rotation region 14a and be guided to the upper straight region 14a, and the lower pin 64 may enter the lower rotation region 15b after reaching the front end of the lower rotation region 15b and be guided to the lower straight region 15b, and the rotating body 60 may be moved forward in an inclined state.

When the moving body 40 is retracted, the upper pin 62 located in the upper straight region 14b may be guided backward along the upper straight region 14b, and may enter the upper rotation region 14a from the rear end of the upper straight region 14b and be guided to the upper rotation region 14a. In addition, the lower pin 64 located in the lower straight region 15b may be guided backward along the lower straight region 15b, and may enter the lower rotation region 15a from the rear end of the lower straight region 15b and be guided to the lower rotation region 15a.

While the upper pin 62 is guided to the upper rotation region 14a and the lower pin 64 is guided to the lower rotation region 15a, the rotating body 60 may be rotated in reverse around the rotation shaft 61. The rotating body 60 may be disposed horizontally.

The above description is merely an illustrative explanation of the technical idea of the present disclosure, and various modifications and variations will be possible to those skilled in the art without departing from the essential characteristics of the present invention.

Accordingly, the embodiments disclosed in the present disclosure are not intended to limit the technical idea of the present disclosure, but are for illustrative purposes, and the scope of the technical idea of the present disclosure is not limited by these embodiments.

## Claims

1. An automotive display comprising:
a fixed module (1) provided with a guide rail;
a driving source (2) disposed in the fixed module; and
a moving module (3) connected to the driving source (2) and disposed to move in the fixed module (1),
wherein the moving module (3) comprises:
a moving body (40) connected to the driving source (2) and moved by the driving source (2); and
a display module (50) rotatably connected to the moving body (40) and guided by the guide rail,
wherein a pair of pins (62 and 64) are formed on the display module (50),
**characterized in that** the guide rail comprises:
an upper guide rail (14) in which an upper pin (62) of the pair of pins (62 and 64) is guided; and
a lower guide rail (15) in which a lower pin (64) of the pair of pins (62 and 64) is guided,
wherein each of the upper guide rail (14) and the lower guide rail (15) has a rotational region guiding a rotating body (60) of the display module (50) to rotate, and a linear movement region guiding the rotating body (60) of the display module (50) to move linearly,
an **in that** the moving body (40) is formed with an upper guide hole (42) through which the upper pin (62) passes and guides the upper pin (62), and a lower guide hole (43) through which the lower pin (64) passes and guides the lower pin (64),
wherein a length of the lower guide hole (43) is shorter than a length of the upper guide hole (42).

2. The automotive display of claim 1,
wherein the rotation region comprises
an upper rotation region (14a) in which the upper pin (62) is guided; and
a lower rotation region (15a) in which the lower pin (64) is guided.

3. The automotive display of claim 2,
wherein a length of the upper rotation region (14a) is longer than a length of the lower rotation region (15a).

4. The automotive display of claim 2 or 3,
wherein the upper rotation region (14a) is convex upward.

5. The automotive display of any one claims 2 to 4,
wherein a curvature of the upper rotation region (14a) is greater than a curvature of the lower rotation region (15a).

6. The automotive display of any one claims 2 to 5,
wherein the linear movement region comprises:
an upper linear movement region (14b) extending forward from a front end of the upper rotation region (14a) and in which the upper pin (62) is guided; and
a lower linear movement region (15b) extending forward from a front end of the lower rotation region (15a) and in which the lower pin (64) is guided.

7. The automotive display of any one of claims 1 to 6,
wherein the display module (50) comprises:
a display element (72) disposed on the rotating body (60); and
a display interface (74) disposed on the display element (72),
wherein the rotating body(60) is provided with the pair of pins (62 and 64) and a rotational shaft (61) rotatably supported by the moving body

8. The automotive display of claim 7,
wherein a distance between the rotational shaft (61) and a front end of the moving body (40) is shorter than a distance between the rotational shaft (61) and the rear end of the moving body (40).

9. The automotive display of claim 7 or 8,
wherein a support portion (41) on which the rotational shaft (61) is rotatably supported is formed on the moving body (40),
wherein a height of the support portion (41) is lower than a height of the lower guide rail (15).

10. The automotive display of any one of claims 1 to 9,
wherein the driving source (2) comprises
a motor (21); and
a lead screw (22) rotated by the motor (21) and disposed long in the front and rear direction,
wherein the moving module (3) further comprises a block (31) disposed on the moving body (40) and moved linearly by the lead screw (22).

11. The automotive display of claim 10,
wherein the fixed module (1) further comprises a lead screw supporter (17) rotably supporting the lead screw (22).

12. The automotive display of any one of claims 1 to 11,
wherein the fixed module (1) comprises a guide rack (18) formed long in the front and rear direction,
wherein the moving module (3) further comprises a pinion (44) rotatably disposed on the moving body (40) and engaged with the guide rack (18).

13. The automotive display of any one of claims 1 to 12,
wherein the fixed module (1) comprises a housing (11) in which a space is formed in which the moving module (3) is accommodated,
wherein an opening (11a) through which the moving module (3) passes is formed on the housing (11).

14. The automotive display of claim 13,
wherein the fixed module (1) comprises a protruding body (16) protruding forward from the housing (11),
at least a portion of the upper guide rail (14) and the lower guide rail (15) is formed on the protruding body (16).

15. The automotive display of any one of claims 1 to 14, further comprising;
a processor (8) configured to control the driving source (2) in plurality of modes,
wherein the plurality of modes comprises:
a first mode in which a screen of the display module (50) faces downward;
a second mode in which the display module (50) is tilted in an inclined manner; and
a third mode in which the display module (50) is moved forward more than the second mode.

## Patentansprüche

1. Fahrzeuganzeige, umfassend:
ein feststehendes Modul (1), das mit einer Führungsschiene versehen ist;
eine Antriebsquelle (2), die in dem feststehenden Modul angeordnet ist; und
ein bewegbares Modul (3), das mit der Antriebsquelle (2) verbunden und derart angeordnet ist, sich in dem feststehenden Modul (1) zu bewegen,
wobei das bewegbare Modul (3) umfasst:
einen bewegbaren Körper (40), der mit der Antriebsquelle (2) verbunden ist und durch die Antriebsquelle (2) bewegt wird; und
ein Anzeigemodul (50), das drehbar mit dem bewegbaren Körper (40) verbunden und durch die Führungsschiene geführt ist,
wobei ein Paar Stifte (62 und 64) an dem Anzeigemodul (50) ausgebildet ist,
**dadurch gekennzeichnet, dass** die Führungsschiene umfasst:
eine obere Führungsschiene (14), in der ein oberer Stift (62) des Paars Stifte (62 und 64) geführt ist; und
eine untere Führungsschiene (15), in der ein unterer Stift (64) des Paars Stifte (62 und 64) geführt ist,
wobei die obere Führungsschiene (14) und die untere Führungsschiene (15) jeweils einen Drehbereich, der den Drehkörper (60) des Anzeigemoduls (50) derart führt, dass er sich dreht, und einen Linearbewegungsbereich, der den Drehkörper (60) des Anzeigemoduls (50) derart führt, dass er sich linear bewegt, aufweisen,
und dadurch, dass der bewegbare Körper (40) mit einem oberen Führungsloch (42), durch das der obere Stift (62) hindurchtritt und das den oberen Stift (62) führt, und einem unteren Führungsloch (43), durch das der untere Stift (64) hindurchtritt und das den unteren Stift (64) führt, ausgebildet ist,
wobei eine Länge des unteren Führungslochs (43) kürzer ist als eine Länge des oberen Führungslochs (42).

2. Fahrzeuganzeige nach Anspruch 1,
wobei der Drehbereich umfasst:
einen oberen Drehbereich (14a), in dem der obere Stift (62) geführt ist; und
einen unteren Drehbereich (15a), in dem der untere Stift (64) geführt ist.

3. Fahrzeuganzeige nach Anspruch 2,
wobei eine Länge des oberen Drehbereichs (14a) länger ist als eine Länge des unteren Drehbereichs (15a).

4. Fahrzeuganzeige nach Anspruch 2 oder 3,
wobei der obere Drehbereich (14a) nach oben konvex ist.

5. Fahrzeuganzeige nach einem der Ansprüche 2 bis 4,
wobei eine Krümmung des oberen Drehbereichs (14a) größer ist als eine Krümmung des unteren Drehbereichs (15a).

6. Fahrzeuganzeige nach einem der Ansprüche 2 bis 5,
wobei der Linearbewegungsbereich umfasst:
einen oberen Linearbewegungsbereich (14b), der sich von einem vorderen Ende des oberen Drehbereichs (14a) nach vorn erstreckt und in dem der obere Stift (62) geführt ist; und
einen unteren Linearbewegungsbereich (15b), der sich von einem vorderen Ende des unteren Drehbereichs (15a) nach vorn erstreckt und in dem der untere Stift (64) geführt ist.

7. Fahrzeuganzeige nach einem der Ansprüche 1 bis 6,
wobei das Anzeigemodul (50) umfasst:
ein Anzeigeelement (72), das auf dem Drehkörper (60) angeordnet ist; und
eine Anzeigeschnittstelle (74), die auf dem Anzeigeelement (72) angeordnet ist,
wobei der Drehkörper (60) mit dem Paar von Stiften (62 und 64) und einer Drehwelle (61), die durch den bewegbaren Körper (40) drehbar gelagert ist, versehen ist.

8. Fahrzeuganzeige nach Anspruch 7,
wobei ein Abstand zwischen der Drehwelle (61) und einem vorderen Ende des bewegbaren Körpers (40) kürzer ist als ein Abstand zwischen der Drehwelle (61) und dem hinteren Ende des bewegbaren Körpers (40).

9. Fahrzeuganzeige nach Anspruch 7 oder 8,
wobei an dem bewegbaren Körper (40) ein Stützabschnitt (41) ausgebildet ist, an dem die Drehwelle (61) drehbar gelagert ist,
wobei eine Höhe des Stützabschnitts (41) niedriger ist als eine Höhe der unteren Führungsschiene (15).

10. Fahrzeuganzeige nach einem der Ansprüche 1 bis 9,
wobei die Antriebsquelle (2) umfasst:
einen Motor (21); und
eine Gewindespindel (22), die durch den Motor (21) gedreht wird und längs in der Vorwärts- und Rückwärtsrichtung angeordnet ist,
wobei das bewegbare Modul (3) ferner einen Block (31) umfasst, der auf dem bewegbaren Körper (40) angeordnet ist und durch die Gewindespindel (22) linear bewegt wird.

11. Fahrzeuganzeige nach Anspruch 10,
wobei das feststehende Modul (1) ferner einen Gewindespindelhalter (17) umfasst, der die Gewindespindel (22) drehbar lagert.

12. Fahrzeuganzeige nach einem der Ansprüche 1 bis 11,
wobei das feststehende Modul (1) eine Führungszahnstange (18) umfasst, die längs in der Vorwärts- und Rückwärtsrichtung ausgebildet ist,
wobei das bewegbare Modul (3) ferner ein Ritzel (44) umfasst, das drehbar auf dem bewegbaren Körper (40) angeordnet ist und mit der Führungszahnstange (18) in Eingriff steht.

13. Fahrzeuganzeige nach einem der Ansprüche 1 bis 12,
wobei das feststehende Modul (1) ein Gehäuse (11) umfasst, in dem ein Raum ausgebildet ist, in dem das bewegbare Modul (3) aufgenommen ist,
wobei an dem Gehäuse (11) eine Öffnung (11a) ausgebildet ist, durch die das bewegbare Modul (3) hindurchtritt.

14. Fahrzeuganzeige nach Anspruch 13,
wobei das feststehende Modul (1) einen Vorsprungskörper (16) umfasst, der von dem Gehäuse (11) nach vorn vorsteht,
wobei mindestens ein Abschnitt der oberen Führungsschiene (14) und der unteren Führungsschiene (15) an dem Vorsprungskörper (16) ausgebildet ist.

15. Fahrzeuganzeige nach einem der Ansprüche 1 bis 14, ferner umfassend:
einen Prozessor (8), der dazu eingerichtet ist, die Antriebsquelle (2) in einer Mehrzahl von Modi zu steuern,
wobei die Mehrzahl von Modi umfasst:
einen ersten Modus, in dem ein Bildschirm des Anzeigemoduls (50) nach unten weist;
einen zweiten Modus, in dem das Anzeigemodul (50) in geneigter Weise gekippt ist; und
einen dritten Modus, in dem das Anzeigemodul (50) weiter nach vorn bewegt wird als in dem zweiten Modus.

## Revendications

1. Afficheur automobile comprenant :
un module fixe (1) pourvu d'un rail de guidage ;
une source d'entraînement (2) disposée dans le module fixe ; et
un module mobile (3) relié à la source d'entraînement (2) et disposé de manière à se déplacer dans le module fixe (1),
dans lequel le module mobile (3) comprend :
un corps mobile (40) relié à la source d'entraînement (2) et déplacé par la source d'entraînement (2) ; et
un module d'affichage (50) relié de manière rotative au corps mobile (40) et guidé par le rail de guidage,
dans lequel une paire de broches (62 et 64) est formée sur le module d'affichage (50),
**caractérisé en ce que** le rail de guidage comprend :
un rail de guidage supérieur (14) dans lequel une broche supérieure (62) de la paire de broches (62 et 64) est guidée ; et
un rail de guidage inférieur (15) dans lequel une broche inférieure (64) de la paire de broches (62 et 64) est guidée,
dans lequel le rail de guidage supérieur (14) et le rail de guidage inférieur (15) comportent chacun une région de rotation guidant le corps rotatif (60) du module d'affichage (50) en rotation, et une région de déplacement linéaire guidant le corps rotatif (60) du module d'affichage (50) en déplacement linéaire,
et **en ce que** le corps mobile (40) est formé avec un trou de guidage supérieur (42), à travers lequel la broche supérieure (62) passe et qui guide la broche supérieure (62), et un trou de guidage inférieur (43), à travers lequel la broche inférieure (64) passe et qui guide la broche inférieure (64),
dans lequel une longueur du trou de guidage inférieur (43) est plus courte qu'une longueur du trou de guidage supérieur (42).

2. Afficheur automobile selon la revendication 1,
dans lequel la région de rotation comprend :
une région de rotation supérieure (14a) dans laquelle la broche supérieure (62) est guidée ; et
une région de rotation inférieure (15a) dans laquelle la broche inférieure (64) est guidée.

3. Afficheur automobile selon la revendication 2,
dans lequel une longueur de la région de rotation supérieure (14a) est plus longue qu'une longueur de la région de rotation inférieure (15a).

4. Afficheur automobile selon la revendication 2 ou 3,
dans lequel la région de rotation supérieure (14a) est convexe vers le haut.

5. Afficheur automobile selon l'une quelconque des revendications 2 à 4,
dans lequel une courbure de la région de rotation supérieure (14a) est supérieure à une courbure de la région de rotation inférieure (15a).

6. Afficheur automobile selon l'une quelconque des revendications 2 à 5,
dans lequel la région de déplacement linéaire comprend :
une région de déplacement linéaire supérieure (14b) s'étendant vers l'avant à partir d'une extrémité avant de la région de rotation supérieure (14a) et dans laquelle la broche supérieure (62) est guidée ; et
une région de déplacement linéaire inférieure (15b) s'étendant vers l'avant à partir d'une extrémité avant de la région de rotation inférieure (15a) et dans laquelle la broche inférieure (64) est guidée.

7. Afficheur automobile selon l'une quelconque des revendications 1 à 6,
dans lequel le module d'affichage (50) comprend :
un élément d'affichage (72) disposé sur le corps rotatif (60) ; et
une interface d'affichage (74) disposée sur l'élément d'affichage (72),
dans lequel le corps rotatif (60) est pourvu de la paire de broches (62 et 64) et d'un arbre de rotation (61) supporté de manière rotative par le corps mobile (40).

8. Afficheur automobile selon la revendication 7,
dans lequel une distance entre l'arbre de rotation (61) et une extrémité avant du corps mobile (40) est plus courte qu'une distance entre l'arbre de rotation (61) et l'extrémité arrière du corps mobile (40).

9. Afficheur automobile selon la revendication 7 ou 8,
dans lequel une portion de support (41), sur laquelle l'arbre de rotation (61) est supporté de manière rotative, est formée sur le corps mobile (40),
dans lequel une hauteur de la portion de support (41) est inférieure à une hauteur du rail de guidage inférieur (15).

10. Afficheur automobile selon l'une quelconque des revendications 1 à 9,
dans lequel la source d'entraînement (2) comprend :
un moteur (21) ; et
une vis-mère (22) entraînée en rotation par le moteur (21) et disposée longitudinalement dans la direction avant-arrière,
dans lequel le module mobile (3) comprend en outre un bloc (31) disposé sur le corps mobile (40) et déplacé linéairement par la vis-mère (22).

11. Afficheur automobile selon la revendication 10,
dans lequel le module fixe (1) comprend en outre un support de vis-mère (17) supportant en rotation la vis-mère (22).

12. Afficheur automobile selon l'une quelconque des revendications 1 à 11,
dans lequel le module fixe (1) comprend une crémaillère de guidage (18) formée longitudinalement dans la direction avant-arrière,
dans lequel le module mobile (3) comprend en outre un pignon (44) disposé de manière rotative sur le corps mobile (40) et en prise avec la crémaillère de guidage (18).

13. Afficheur automobile selon l'une quelconque des revendications 1 à 12,
dans lequel le module fixe (1) comprend un boîtier (11) dans lequel est formé un espace dans lequel le module mobile (3) est logé,
dans lequel une ouverture (11a), à travers laquelle le module mobile (3) passe, est formée sur le boîtier (11).

14. Afficheur automobile selon la revendication 13,
dans lequel le module fixe (1) comprend un corps saillant (16) faisant saillie vers l'avant à partir du boîtier (11),
dans lequel au moins une portion du rail de guidage supérieur (14) et du rail de guidage inférieur (15) est formée sur le corps saillant (16).

15. Afficheur automobile selon l'une quelconque des revendications 1 à 14, comprenant en outre :
un processeur (8) configuré pour commander la source d'entraînement (2) dans une pluralité de modes,
dans lequel la pluralité de modes comprend :
un premier mode dans lequel un écran du module d'affichage (50) est orienté vers le bas ;
un deuxième mode dans lequel le module d'affichage (50) est basculé de manière inclinée ; et
un troisième mode dans lequel le module d'affichage (50) est déplacé davantage vers l'avant que dans le deuxième mode.
